**Europäisches Patentamt**

**European Patent Office**

(19)

**Office européen des brevets**

(11) Numéro de publication : **0 152 363**
**B1**

(12) **FASCICULE DE BREVET EUROPÉEN**

(45) Date de publication du fascicule du brevet :
28.06.89

(51) Int. Cl.⁴ : **A 01 F 25/20**

(21) Numéro de dépôt : **85440004.1**

(22) Date de dépôt : **06.02.85**

(54) Machines pour le prélèvement de blocs de fourrage dans un silo.

(30) Priorité : 07.02.84 FR 8401979

(43) Date de publication de la demande :
21.08.85 Bulletin 85/34

(45) Mention de la délivrance du brevet :
28.06.89 Bulletin 89/26

(84) Etats contractants désignés :
**AT BE DE GB IT NL SE**

(56) Documents cités :
**FR–A– 2 389 805**
**FR–A– 2 514 229**

(73) Titulaire : **KUHN S.A.**
**4, Impasse des Fabriques**
**F-67700 Saverne (FR)**

(72) Inventeur : **Oberle, Edmond**
**11, Rue de Thal Haegen**
**F-67700 Saverne (FR)**
Inventeur : **Wattron, Bernard**
**159, rue Principale Schwenheim**
**F-67440 Marmoutier (FR)**

(74) Mandataire : **Andres, Jean-Claude**
**KUHN S.A. 4, Impasse des Fabriques**
**F-67700 Saverne (FR)**

EP 0 152 363 B1

## Description

La présente invention concerne les machines pour le prélèvement de blocs de fourrage dans un silo horizontal, comportant notamment un châssis pourvu à sa partie inférieure de dents et, à une certaine distance au-dessus de ces dents, d'un bras portant à son extrémité extérieure un dispositif de coupe, lequel bras est articulé par rapport au châssis et est déplaçable dans un plan sensiblement horizontal au moyen d'un vérin hydraulique à double tige qui est fixé sur le châssis et qui est muni d'un organe d'entraînement qui engrène avec une roue ou couronne dentée reliée audit bras.

Sur une machine de ce genre, connue dans la demande de brevet FR-A-2 514 229, le vérin hydraulique est muni d'une chaîne qui assure l'entraînement du bras portant le dispositif de coupe. Sur cette machine, on constate assez rapidement un important allongement de ladite chaîne, ce qui fausse la course du dispositif de coupe.

D'autre part, la puissance transmissible est relativement limitée, notamment en raison du manque de rigidité des moyens d'entraînement. De ce fait, cet agencement ne permet pas de découper des blocs de gros volume. En sus, le prix d'une telle chaîne est assez élevé et elle nécessite des moyens spéciaux pour sa mise en place.

La présente invention a pour but une machine pour le prélèvement de blocs de fourrage dans un silo, qui ne présente pas les inconvénients précités.

A cet effet, une importante caractéristique de l'invention consiste en ce que l'organe d'entraînement du bras portant le dispositif de coupe est une crémaillère et que le châssis comporte au moins une butée contre laquelle s'appuie le corps du vérin, cette butée se situant, par rapport audit vérin, sur le côté opposé à celui sur lequel se trouve la crémaillère.

Grâce à cette crémaillère on arrive à réduire les jeux dans la cinématique d'entraînement, ce qui permet d'obtenir une trajectoire beaucoup plus précise. En sus, on obtient une bonne régularité au niveau de l'avance du dispositif de coupe. Enfin, elle arrive à transmettre plus de puissance pour un encombrement moindre, ce qui permet la découpe de blocs plus volumineux. Ladite crémaillère peut être obtenue d'une manière peu onéreuse et se fixe facilement, par exemple par soudure ou au moyen de goupilles, sur le corps du vérin hydraulique. D'autre part, ladite butée permet un meilleur guidage du corps du vérin et assure l'engrènement de la crémaillère avec la roue dentée reliée au bras portant le dispositif de coupe. Elle peut avantageusement être constituée par un galet dont la position est réglable afin de pouvoir modifier ledit engrènement.

D'autres caractéristiques et avantages ressortiront de la description ci-après, avec référence aux dessins annexés qui représentent, à titre d'exemple non limitatif, une forme de réalisation de l'invention.

Dans ces dessins :

— La figure 1 représente une vue de côté, avec une coupe partielle, d'une machine selon l'invention,

— La figure 2 représente une vue de dessus de cette machine,

— La figure 3 représente, à plus grande échelle, une coupe suivant le plan III-III de la figure 2,

— La figure 4 représente, à plus grande échelle, une vue de détail des moyens de fixation du vérin hydraulique sur le châssis de la machine,

— La figure 5 représente une vue de côté de ces mêmes moyens.

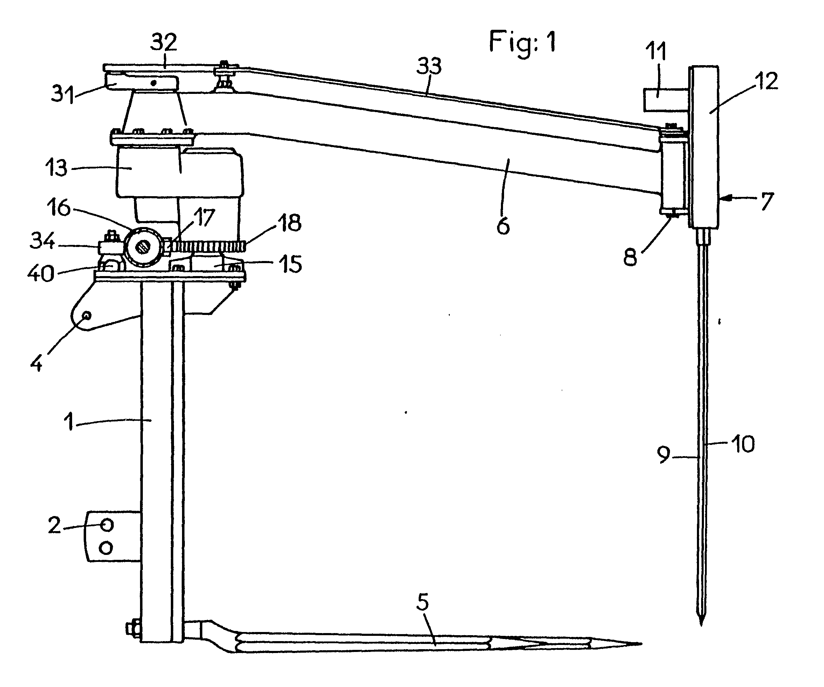

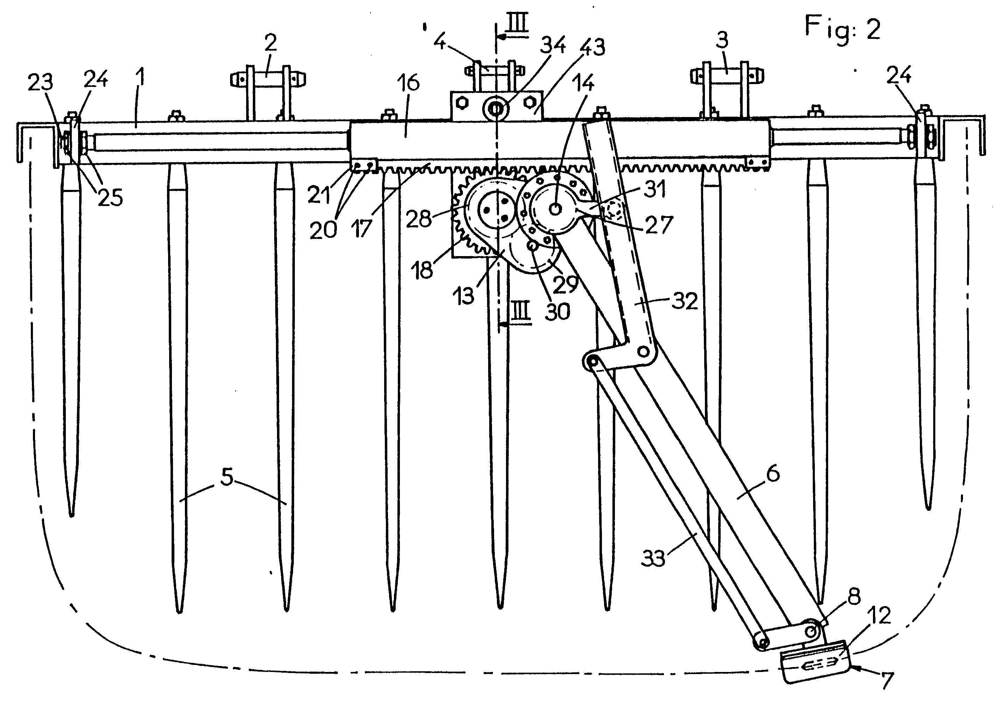

Telle qu'elle est représentée sur les figures 1 et 2, la machine selon l'invention comprend notamment un châssis (1) formant un cadre rigide. Ce châssis (1) comporte trois points d'accouplement pour l'attelage à un tracteur d'entraînement non représenté. Ces points d'accouplement sont constitués par deux tourillons inférieurs (2 et 3) et une chape supérieure (4). Ledit châssis est également pourvu à sa partie inférieure de dents (5) qui s'étendent dans un plan sensiblement horizontal. A sa partie supérieure est prévu un bras (6) qui porte à son extrémité extérieure un dispositif de coupe (7). Celui-ci est articulé sur ledit bras au moyen d'un axe sensiblement vertical (8). Il se compose essentiellement de deux couteaux parallèles (9 et 10) qui sont entraînés en un mouvement alternatif au moyen d'un moteur hydraulique (11) et d'excentriques logés dans un boîtier (12). Ces couteaux (9 et 10) s'étendent verticalement pratiquement jusqu'aux dents (5) prévues à la partie inférieure du châssis (1). Ces deux couteaux (9 et 10) pourraient être remplacés par un seul couteau entraîné de la même manière.

Le bras (6) portant le dispositif de coupe (7) est articulé sur un support (13) au moyen d'un axe sensiblement vertical (14). Ce support (13) est lui-même articulé sur un axe sensiblement vertical (15) qui est solidaire du châssis (1) de la machine. Ledit support peut être déplacé autour de cet axe (15) au moyen d'un vérin hydraulique à double tige (16). La longueur du bras (6) est supérieure à celle du support (13).

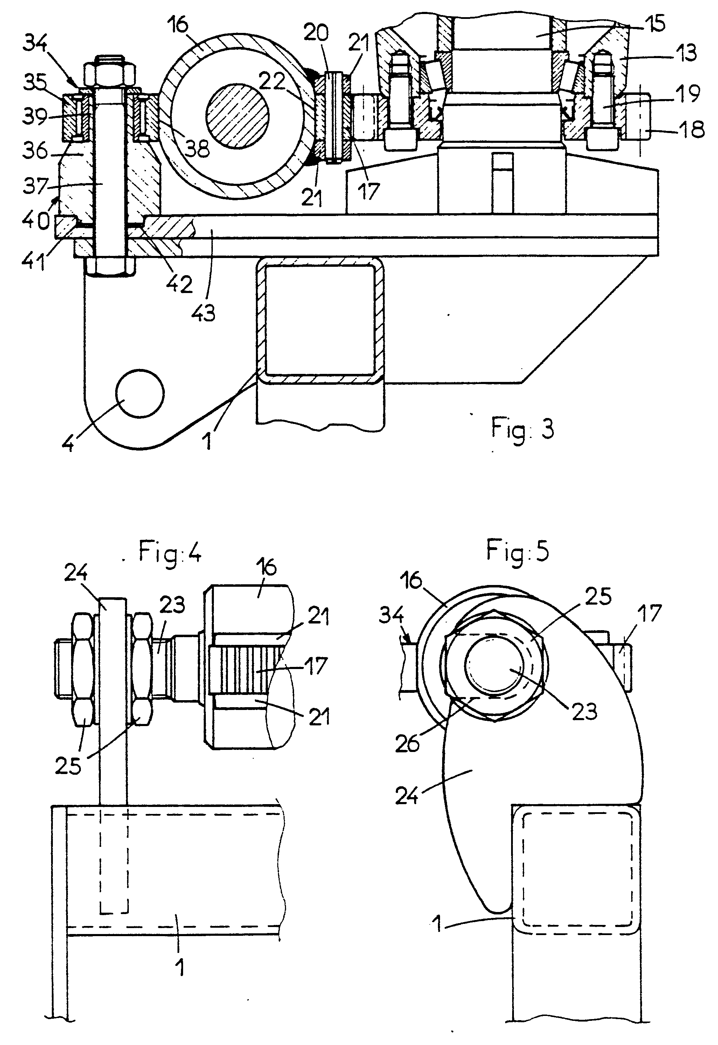

Conformément à la présente invention, le corps de ce vérin hydraulique (16) est muni d'une crémaillère (17) qui engrène avec une roue ou couronne dentée (18) qui est reliée au bras (6) portant le dispositif de coupe (7). Dans l'exemple représenté, cette liaison est assurée par l'intermédiaire du support (13). Cette couronne dentée (16) est fixée à la partie inférieure du support (13) au moyen de vis (19). (Figure 3). Par ailleurs, le châssis (1) comporte une butée (34) contre laquelle s'appuie le corps du vérin (16). Cette butée (34) se situe sur le côté opposé à celui sur lequel se trouve la crémaillère (17), sensiblement en face de la roue dentée (18). Elle permet notamment de guider le corps du vérin (16) et de contrôler l'engrènement de la crémaillère (17) avec la roue dentée (18). On pourrait également prévoir deux butées (34) placées à une certaine distance l'une de l'autre afin d'améliorer le guidage rectiligne du vérin (16).

Ladite crémaillère (17) est fixée d'une manière amovible sur le corps du vérin hydraulique (16). Ce montage permet de la changer très rapidement en cas d'usure ou de détérioration. Dans l'exemple représenté sur les figures 2 et 3, cette fixation est réalisée au moyen de goupilles (20). Celles-ci lient la crémaillère (17) à des pattes (21) soudées sur le corps du vérin (16). Ledit corps comporte avantageusement un méplat (22) en vue d'améliorer l'assise de la crémaillère (17).

Le vérin hydraulique (16) est fixé sur le châssis (1) de la machine. Il comporte à chacune de ses extrémités une partie filetée (23) permettant sa fixation sur des pattes (24) solidaires du châssis (1), au moyen d'écrous (25). Ce montage ressort en détail des figures 4 et 5. Lesdites pattes (24) possèdent des entailles (26) de forme allongée, pour le passage des parties filetées (23) du vérin (16). Celui-ci peut ainsi être dégagé desdites pattes (24) après un simple desserrage des écrous (25).

Le déplacement de la crémaillère (17) est donc assuré par le vérin (16) qui peut être commandé à partir du siège du tracteur. Ladite crémaillère entraîne alors la couronne dentée (18) et le support (13) et, par l'intermédiaire de ce dernier, le bras porteur (6) du dispositif de coupe (7), autour de l'axe d'articulation (15) solidaire du châssis (1). Dans ledit support (13) sont par ailleurs prévus des moyens pour faire tourner le bras porteur (6) du dispositif de coupe (7) autour de son axe d'articulation (14) avec le support (13), en même temps qu'il tourne avec ce dernier. Tel que cela ressort de la figure 2, ces moyens sont constitués par trois pignons (27, 28 et 29). Le pignon (27) est solidaire du bras porteur (6). Le pignon (28) est fixé rigidement sur l'axe d'articulation (15) qui est solidaire du châssis (1). Enfin, le pignon (29) est monté libre en rotation sur un axe (30) solidaire du support (13). Ce pignon (29) assure la liaison entre les deux pignons (27 et 28) précités. En raison de la disposition de ces pignons (27, 28 et 29), la rotation du bras porteur (6) autour de son axe (14) s'effectue dans le sens opposé au sens de rotation du support (13) autour de son axe d'articulation (15) avec le châssis (1). En sus, ces deux mouvements de rotation sont synchronisés de telle sorte que la vitesse de rotation du bras porteur (6) autour de son axe d'articulation (14) est égale à quatre tiers de la vitesse de rotation du support (13) autour de son axe d'articulation (15) avec le châssis (1). Grâce à ces mouvements synchronisés le support (13) et le bras porteur (6) déplacent le dispositif de coupe (7) suivant une trajectoire en forme de U, en vue du découpage de blocs de forme rectangulaire. Des tringles (31, 32 et 33) disposées au-dessus du bras (6) orientent la tête de coupe (7) de sorte que les couteaux (9 et 10) soient toujours dirigés dans la direction de déplacement.

Comme cela ressort clairement de la figure 3, la butée (34) est constituée par un galet (35) monté tournant sur un axe (36). Cet axe est fixé sur le châssis (1) au moyen d'un boulon (37). Grâce au galet (35), le frottement avec le corps du vérin (16) est négligeable. Ce dernier comporte un méplat (38) pour améliorer le contact avec le galet (35).

La position de ce galet (35) est avantageusement réglable. A cet effet, la partie (39) de l'axe (36) sur laquelle il est fixé, est excentrée par rapport au boulon de fixation (37). Ainsi, en faisant tourner cet axe (36) autour dudit boulon, le galet (35) se déplace par rapport au corps du vérin (16). En poussant sur le corps du vérin, on arrive à rattraper le jeu pouvant exister entre la crémaillère (17) et la roue dentée (18). Pour faciliter ladite rotation de l'axe (36), celui-ci comporte une partie hexagonale (40) pouvant être saisie avec une clef plate ordinaire. D'autre part, ledit axe (36) comporte un bout cylindrique (41) s'engageant dans un alésage (42) prévu dans une plaque support (43) solidaire du châssis (1). Ce bout cylindrique (41) permet un bon centrage de la butée (34) et évite que le boulon de fixation (37) soit soumis à d'importants efforts de cisaillement.

Il est bien évident qu'on pourra apporter à l'exemple de réalisation décrit ci-dessus divers perfectionnements, modifications ou additions ou remplacer certains éléments par des éléments équivalents sans pour autant sortir du cadre de la présente invention, tel qu'il est défini par les revendications.

## Revendications

1. Machine pour le prélèvement de blocs de fourrage dans un silo horizontal, comportant notamment un châssis (1) pourvu, à sa partie inférieure, de dents (5) et, à une certaine distance au-dessus de ces dents (5), d'un bras (6) portant à son extrémité extérieure un dispositif de coupe (7), lequel bras (6) est articulé par rapport au châssis (1) et est déplaçable dans un plan sensiblement horizontal au moyen d'un vérin hydraulique à double tige (16) qui est fixé sur le châssis (1) et qui est muni d'un organe d'entraînement qui engrène avec une roue ou couronne dentée (18) reliée au bras (6), caractérisée par le fait que l'organe d'entraînement est une crémaillère (17) et que le châssis (1) comporte au moins une butée (34) contre laquelle s'appuie le corps du vérin (16), cette butée se situant, par rapport audit vérin (16), sur le côté opposé à celui sur lequel se trouve la crémaillère (17).

2. Machine selon la revendication 1, caractérisée par le fait que la crémaillère (17) est fixée d'une manière amovible sur le corps du vérin hydraulique (16).

3. Machine selon la revendication 2, caractérisée par le fait que la fixation de la crémaillère (17) sur le corps du vérin (16) est réalisée au moyen de goupilles (20).

4. Machine selon l'une quelconque des revendications 1 à 3, caractérisée par le fait que le corps du vérin hydraulique (16) comporte un méplat (22).

5. Machine selon l'une quelconque des revendications précédentes, caractérisée par le fait que le vérin hydraulique (16) comporte à chaque extrémité une partie filetée (23) permettant sa fixation sur des pattes (24) solidaires du châssis (1) au moyen d'écrous (25).

6. Machine selon la revendication 5, caractérisée par le fait que les pattes (24) solidaires du châssis (1) comportent des entailles (26) de forme allongée, pour le passage des parties filetées (23) du vérin hydraulique (16).

7. Machine selon la revendication 1, caractérisée par le fait que la butée (34) se situe sensiblement en face de la roue dentée (18) avec laquelle engrène la crémaillère (17).

8. Machine selon la revendication 1 ou 7, caractérisée par le fait que la butée (34) est constituée par un galet (35) monté tournant sur un axe (36) fixé sur le châssis (1) au moyen d'un boulon (37).

9. Machine selon l'une quelconque des revendications 1, 7 ou 8, caractérisée par le fait que le corps du vérin (16) comporte un méplat (38).

10. Machine selon l'une des revendications 1, 7 ou 8, caractérisée par le fait que la position de la butée (34) est réglable.

11. Machine selon la revendication 10, caractérisée par le fait que le galet (35) constituant la butée (34) est excentré par rapport au boulon de fixation (37).

12. Machine selon la revendication 11, caractérisée par le fait que l'axe (36) portant le galet (35) comporte une partie excentrée (39).

13. Machine selon la revendication 10, caractérisée par fait que l'axe (36) portant le galet (35) comporte une partie hexagonale (40).

14. Machine selon l'une quelconque des revendications 8 ou 10 à 13, caractérisée par le fait que l'axe (36) portant le galet (35) comporte un bout cylindrique (41).


## Claims

1. Machine for cutting off blocks of folder in a horizontal silo, comprising in particular a chassis (1) which is provided at its lower part with teeth (5) and, at a certain distance above these teeth (5), with an arm (6) which bears a cutting device (7) at its outer end, is articulated in relation to the chassis (1) and can be moved in a substantially horizontal plane by means of a twin-rod hydraulic jack (16) which is fixed to the chassis (1) and provided with a drive member which engages with a gear or crown wheel (18) connected to the arm (6), characterised in that the drive member is a rack (17) and that the chassis (1) comprises at least one stop (34) against which the body of the jack (16) rests and which is disposed, in relation to the said jack (16), on the side opposite that on which the rack (17) is disposed.

2. Machine according to claim 1, characterised in that the rack (17) is fixed in a detachable manner to the body of the hydraulic jack (16).

3. Machine according to claim 2, characterised in that the rack (17) is fixed to the body of the jack (16) by means of pins (20).

4. Machine according to any one of claims 1 to 3, characterised in that the body of the hydraulic jack (16) comprises at flat part (22).

5. Machine according to any one of the preceding claims, characterised in that the hydraulic jack (16) comprises at each end a threaded part (23) enabling it to be fixed to lugs (24), which are integral with the chassis (1), by means of nuts (25).

6. Machine according to claim 5, characterised in that the lugs (24), which are integral with the chassis (1), comprise elongate slots (26) for the passage of the threaded parts (23) of the hydraulic jack (16).

7. Machine according to claim 1, characterised in that the stop (34) is disposed substantially opposite the gear wheel (18) with which the rack (17) engages.

8. Machine according to claim 1 or 7, characterised in that the stop (34) is formed by a roller (35) which is mounted in a rotatable manner on a shaft (36) which is fixed to the chassis (1) by means of a bolt (37).

9. Machine according to any one of claims 1, 7 or 8, characterised in that the body of the jack (16) comprises a flat part (38).

10. Machine according to one of claims 1, 7 or 8, characterised in that the position of the stop (34) is adjustable.

11. Machine according to claim 10, characterised in that the roller (35) forming the stop (34) is eccentric in relation to the fixing bolt (37).

12. Machine according to claim 11, characterised in that the shaft (36) bearing the roller (35) comprises an eccentric part (39).

13. Machine according to claim 10, characterised in that the shaft (36) bearing the roller (35) comprises a hexagonal part (40).

14. Machine according to any one of claims 8 or 10 to 13, characterised in that the shaft (36) bearing the roller (35) comprises a cylindrical end (41).


## Patentansprüche

1. Maschine zur Entnahme von Futterblöcken aus einem horizontalen Silo, die einen senkrechten Rahmen (1) aufweist, an dessen unterem Teil Gabelzinken (5) und in gewissem Abstand oberhalb dieser Gabelzinken (5) ein Träger (6) angeordnet ist, der an seinem äusseren Ende eine Schneidvorrichtung (7) trägt, wobei der Träger (6) in Bezug auf den Rahmen (1) gelenkig angeordnet ist und in einer im wesentlichen horizontalen Ebene mittels eines hydraulischen Stellantriebs (16) mit Doppelstange bewegbar ist, der am Rahmen befestigt ist und mit einem Antriebsorgan versehen ist, welches mit einem mit dem Träger (6) verbundenen Zahnrad (18) in Eingriff steht, dadurch gekennzeichnet, dass das Antriebsorgan eine Zahnstange (17) ist und dass der Rahmen (1) wenigstens einen Anschlag (34) aufweist, gegen den sich das Gehäuse des Stellantriebes (16) abstützt wobei sich dieser Anschlag bezogen auf den Stellantrieb (16), an der der Zahnstange (17) gegenüberliegenden Seite befindet.

2. Maschine nach Anspruch 1, dadurch gekennzeichnet, dass die Zahnstange (17) am Gehäuse des Stellantriebes (16) abnehmbar befestigt ist.

3. Maschine nach Anspruch 2, dadurch gekennzeichnet, dass die Zahnstange (17) am Gehäuse des Stellantriebes (16) mittels Stiften (20) befestigt ist.

4. Maschine nach irgend einem der Ansprüche 1 bis 3, dadurch gekennzeichnet, dass das Gehäuse des hydraulischen Stellantriebs (16) einen abgeflachten Teil (22) aufweist.

5. Maschine nach irgend einem der vorhergehenden. Ansprüche, dadurch gekennzeichnet, dass der hydraulische Stellantrieb (16) an jedem Ende einen Gewindeteil (23) zur Befestigung an mit dem Rahmen (1) formschlüssig verbundenen Platten (24) mittels Muttern (25) aufweist.

6. Maschine nach Anspruch 5, dadurch gekennzeichnet, dass die mit dem Rahmen (1) formschlüssig verbundenen Platten (24) längliche Kerben (26) zum Durchführen der Gewindeteile (23) des hydraulischen Stellantriebes (16) aufweisen.

7. Maschine nach Anspruch 1, dadurch gekennzeichnet, dass der Anschlag (34) gegenüber dem Zahnrad (18) angeordnet ist, mit welchem die Zahnstange (17) in Eingriff steht.

8. Maschine nach dem Anspruch 1 oder 7, dadurch gekennzeichnet, dass der Anschlag (34) von einer Rolle (35) gebildet ist, die auf einer mit dem Rahmen (1) mittels eines Bolzens (37) befestigen Achse (36) drehbar angeordnet ist.

9. Maschine nach irgend einem der Ansprüche 1, 7 oder 8, dadurch gekennzeichnet, dass das Gehäuse des Stellantriebes (6) einen abgeflachten Teil (38) aufweist.

10. Maschine nach einem der Ansprüche 1, 7 oder 8, dadurch gekennzeichnet, dass die Anordnung des Anschlages (34) einstellbar ist.

11. Maschine nach Anspruch 10, dadurch gekennzeichnet, dass die den Anschlag (34) bildende Rolle (35) gegenüber dem Befestigungsbolzen (37) exzentrisch ist.

12. Maschine nach Anspruch 11, dadurch gekennzeichnet, dass die die Rolle (35) tragende Achse (36) einen exzentrischen Teil (39) aufweist.

13. Maschine nach Anspruch 10, dadurch gekennzeichnet, dass die die Rolle (35) tragende Achse (36) einen hexagonalen Teil (40) aufweist.

14. Maschine nach irgend einem der Ansprüche 8 oder 10 bis 13, dadurch gekennzeichnet, dass die die Rolle (35) tragende Achse (36) einen zylindrischen Endabschnitt (41) aufweist.

Fig: 1

EP 0 152 363 B1

Fig: 2

Fig. 3

Fig. 4

Fig. 5